(19) Europäisches Patentamt
European Patent Office
Office européen des brevets

(11) Publication number: 0 449 466 A1

(12) # EUROPEAN PATENT APPLICATION

(21) Application number: 91302257.0

(51) Int. Cl.[5]: C08G 69/26, C08L 77/06, C08K 7/02

(22) Date of filing: 15.03.91

(30) Priority: 29.03.90 JP 82343/90

(43) Date of publication of application: 02.10.91 Bulletin 91/40

(84) Designated Contracting States: AT BE CH DE DK ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100 (JP)

(72) Inventor: Yamamoto, Sanehiro, c/o Mitsui Petrochem. Ind. Ltd
1-2 Waki 6-chome, Waki-cho
Kuga-gun, Yamaguchi 740 (JP)
Inventor: Takata, Toshimasa, c/o Mitsui Petrochem. Ind. Ltd.
1-2 Waki 6-chome, Waki-cho
Kuga-gun, Yamaguchi 740 (JP)

(74) Representative: Myerscough, Philip Boyd et al
J.A. Kemp & Co. 14 South Square, Gray's Inn
London WC1R 5LX (GB)

(54) **Polyamide and polyamide resin composition.**

(57) An aromatic polyamide having a specific intrinsic viscosity comprises dicarboxylic acid recurring units derivable from terephthalic acid and an aliphatic dicarboxylic acid in specified proportions, and diamine recurring units derivable from an aliphatic alkylenediamine and/or alicyclic alkylenediamine. Polyamide resin compositions containing the aromatic polyamide and a filler are also disclosed.

EP 0 449 466 A1

## FIELD OF THE INVENTION

The present invention relates to a polyamide resin composition. More particularly, the invention relates to a polyamide resin composition having a high heat distortion temperature (high HDT) and a molding temperature of wide range and showing various excellent properties such as low water absorption, high mechanical strength and high impact resistance.

## BACKGROUND OF THE INVENTION

A variety of aromatic polyamide compositions have been heretofore known. For example, Japanese Patent Laid-open Publication No. 59(1984)-53536 filed by the present applicant discloses techniques relating to a molding polyamide composition. The molding polyamide composition comprises a polyamide [A] and a filler [B]. In the composition, the polyamide [A] comprises aromatic dicarboxylic acid recurring units (a) consisting essentially of 60 - 100 % by mole of terephthalic acid recurring units and 0 - 40 % by mole of aromatic dicarboxylic acid recurring units other than the terephthalic acid recurring units, and straight-chain aliphatic alkylenediamine recurring units (b) having 6 - 18 carbon atoms. Further, the polyamide has an intrinsic viscosity [η] of 0.5 to 3.0 dl/g when measured in a concentrated sulfuric acid at 30 °C. The amount of the filler [B] contained in the composition is more than 0 part by weight and not more than 200 parts by weight, per 100 parts by weight of the polyamide [A]. The publication also discloses that examples of the fillers [B] employable in the composition include silica, silica alumina, alumina and graphite.

The above-mentioned molding polyamide composition is more excellent in heat resistance, mechanical properties, physicochemical properties and molding properties, as compared with conventional polyamide compositions. However, since the polyamide composition has a low crystallization speed, the composition is desired to be much more improved in the molding properties.

Japanese Patent Laid-open Publication No. 59(1984)-155426 describes a crystalline polyamide copolymer comprising the following recurring units:

A)

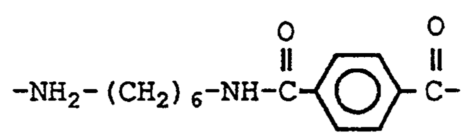

B)

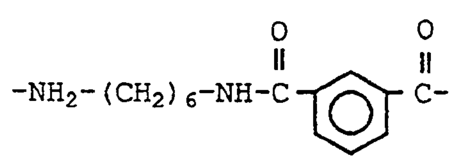

and

C)

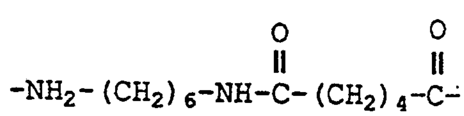

In the copolymer, a molar ratio of A : B : C is in the range of from approx. 60 : 20 : 20 to approx. 90 : 5 : 5.

The above publication also describes a polyamide composition obtained by adding a glass fiber, a glass bead, a mineral fiber, a graphite fiber or a mixture thereof in an amount of approx. 10 to 60 % to the above-mentioned polyamide copolymer. This polyamide composition has a heat distortion temperature (HDT) of approx. 240 to 305 °C.

In detail, the dicarboxylic acid recurring units contained in the crystalline polyamide copolymer described in the above publication contains terephthalic acid recurring units in an amount of approx. 60 to 90 % by mole, isophthalic acid recurring units in an amount of approx. 20 to 5 % by mole and adipic acid recurring units in an amount of approx. 20 to 5 % by mole.

However, the polyamide copolymer containing aromatic dicarboxylic acid recurring units (e.g., terephthalic acid recurring units) in a large amount such as not smaller than 60 % by mole in the dicarboxylic acid recurring units has such a problem that the molding temperature range thereof is narrow.

Recently, polyamide resin compositions showing much higher heat resistance have been extensively developed, and for example, a heat-resistant polyamide resin composition composed of nylon 6 and a glass fiber or a heat-resistant polyamide resin composition composed of nylon 66 and a glass fiber has been used practically. However, a heat distortion temperature (HDT) of the former polyamide resin composition is approx. 190 °C and that of the latter polyamide resin composition is approx. 240 °C, so that both compositions are not always sufficient in the heat distortion temperature (HDT).

Nylon 46 is well known as a heat-resistant polyamide. The nylon 46 shows a high heat distortion temperature (high HDT), namely, 285 °C, but still has a problem that a water absorption thereof is higher than the conventional polyamides.

Accordingly, eagerly desired are polyamides having a heat distortion temperature (HDT) higher than that of nylon 46 and having a water absorption lower than that of the conventional polyamides.

## SUMMARY OF THE INVENTION

The present invention is to solve the above-mentioned problems associated with in the prior arts, and it is an object of the invention is to provide a polyamide resin composition having a high heat distortion temperature (high HDT), a molding temperature of wide range and a low water absorption and showing excellent properties such as high mechanical strength and high impact strength by the use of an aromatic polyamide containing specific recurring units in a specific amount.

There is provided by the present invention an aromatic polyamide which comprises dicarboxylic acid recurring units (a) comprising 50 - 60 % by mole of terephthalic acid recurring units and 40 - 50 % by mole of aliphatic dicarboxylic acid recurring units, and diamine recurring units (b) comprising aliphatic alkylenediamine recurring units and/or alicyclic alkylenediamine recurring units, the aromatic polyamide having an intrinsic viscosity [η] of 0.5 to 3.0 dl/g when measured in a concentrated sulfuric acid at 30 °C.

There is also provided by the invention a polyamide resin composition which contains an aromatic polyamide comprising dicarboxylic acid recurring units (a) comprising 50 - 60 % by mole of terephthalic acid recurring units and 40 - 50 % by mole of aliphatic dicarboxylic acid recurring units preferably having 4 - 12 carbon atoms, and diamine recurring units (b) comprising aliphatic alkylenediamine recurring units and/or alicyclic alkylenediamine recurring units preferably straight aliphatic alkylenediamine recurring units having 6 - 18 carbon atoms, the aromatic polyamide having an intrinsic viscosity [η] of 0.5 to 3.0 dl/g when measured in a concentrated sulfuric acid at 30 °C.

There is further provided by the invention an aromatic polyamide which comprises dicarboxylic acid recurring units (a) comprising 50 - 60 % by mole of terephthalic acid recurring units and 40 - 50 % by mole of aliphatic dicarboxylic acid recurring units having 4 - 12 carbon atoms, and diamine recurring units (b) comprising straight-chain aliphatic alkylenediamine recurring units having 6 - 18 carbon atoms, the aromatic polyamide having an intrinsic viscosity [η] of 0.5 to 3.0 dl/g when measured in a concentrated sulfuric acid at 30 °C.

There is still further provided by the invention a polyamide resin composition which contains an aromatic polyamide comprising dicarboxylic acid recurring units (a) comprising 50 - 60 % by mole of terephthalic acid recurring units and 40 - 50 % by mole of aliphatic dicarboxylic acid recurring units having 4 - 12 carbon atoms, and diamine recurring units (b) comprising straight-chain aliphatic alkylenediamine recurring units having 6 - 18 carbon atoms, the aromatic polyamide having an intrinsic viscosity [η] of 0.5 to 3.0 dl/g when measured in a concentrated sulfuric acid at 30 °C.

The polyamide resin compositions of the present invention contain an aromatic polyamide comprising specific that the compositions have a high heat distortion temperature (high HDT), a molding temperature of wide range and a low water absorption, and further is improved in mechanical strength and impact strength, etc.

## DETAILED DESCRIPTION OF THE INVENTION

The polyamides and the polyamide resin compositions of the present invention are described in detail hereinafter.

The polyamide resin compositions of the invention contains at least an aromatic polyamide [A].

The aromatic polyamide [A] contained in the polyamide resin compositions of the invention comprises, for example, the following dicarboxylic acid recurring units (a) and the following diamine recurring units (b).

The dicarboxylic acid recurring units (a) comprise terephthalic acid recurring units and aliphatic dicarboxylic

acid recurring units (preferably aliphatic dicarboxylic acid recurring units having 4 - 12 carbon atoms).

There is no specific limitation on the number of carbon atoms of the aliphatic dicarboxylic acid recurring units, but the number of carbon atoms thereof preferably is 4 to 25, more preferably 4 to 12. Examples of aliphatic dicarboxylic acids employable for deriving the aliphatic dicarboxylic acid recurring units include succinic acid, adipic acid (AA), azelaic acid, sebacic acid, decanedicarboxylic acid, undecanecarboxylic acid and dodecanedicarboxylic acid. Of these, particularly preferred is adipic acid (AA).

In the invention, the terephthalic acid recurring units are contained in an amount of 50 to 60 % by mole, preferably 52 to 58 % by mole, and the aliphatic dicarboxylic acid recurring units (preferably those having 4 - 12 carbon atoms) are contained in an amount of 40 to 50 % by mole, preferably 42 to 48 % by mole, in 100 % by mole of the dicarboxylic acid recurring units.

When the aromatic polyamide comprises the dicarboxylic acid recurring units (a) comprising the terephthalic acid recurring units in the above-mentioned specific amount and the aliphatic dicarboxylic acid recurring units in the above-mentioned specific amount, a molded product obtained from a composition containing the aromatic polyamide [A] can be improved in various properties such as heat resistance (e.g., heat aging characteristics and heat distortion resistance), mechanical properties (e.g., tensile strength, flexural strength and abrasion resistance) and physicochemical properties (e.g., chemical resistance and water resistance).

In the present invention, polycarboxylic acid recurring units may be contained in a small amount such as not more than approx. 10 % by mole as the dicarboxylic acid recurring units (a) in addition to the above-mentioned terephthalic acid recurring units and aliphatic dicarboxylic acid recurring units. Concrete examples of the polycarboxylic acid recurring units include tribasic acids (e.g., trimellitic acid) and polybasic acids (e.g., pyromellitic acid).

The diamine recurring units (b) constituting the aromatic polyamide [A] may be composed of either aliphatic diamine recurring units only or alicyclic diamine recurring units only. Otherwise, they may be composed of both the aliphatic diamine recurring units and the alicyclic diamine recurring units.

The aliphatic diamine recurring units may be straight-chain alkylenediamine recurring units or branched chain alkylenediamine recurring units. Preferred aliphatic diamine recurring units are straight-chain or branched chain alkylenediamine recurring units having 4 - 25 carbon atoms, and more preferred are straight-chain or branched chain alkylenediamine recurring units having 6 - 18 carbon atoms. Most preferred are straight-chain alkylenediamine recurring units having 6 - 18 carbon atoms.

Examples of such aliphatic diamine recurring units include recurring units derived from straight-chain alkylenediamines such as 1,4-diaminobutane, 1,6-diaminohexane, 1,7-diaminoheptane, 1,8-diaminoctane, 1,9-diaminononane, 1,10-diaminodecane, 1,11-diaminoundecane and 1,12-diaminododecane; and recurring units derived from branched chain alkylenediamines such as 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diamino-2,5-dimethylhexane, 1,6-diamino-2,4-dimethylhexane, 1,6-diamino-3,3-dimethylhexane, 1,6-diamino-2,2-dimethylhexane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane and 1,9-diamino-5-methylnonane.

Of these straight-chain or branched chain alkylenediamine recurring units, preferred are straight-chain alkylenediamine recurring units. Particularly preferred are recurring units derived from one or more compounds of straight-chain alkylenediamines such as 1,6-diaminohexane, 1,8-diaminoctane, 1,10-diaminodecane and 1,12-diaminododecane.

The alicyclic diamine recurring units generally are recurring units having approx. 6 - 25 carbon atoms and are derived from diamines containing at least one alicyclic hydrocarbon ring.

Examples of such alicyclic diamine recurring units include recurring units derived from alicyclic diamines such as 1,3-diaminocyclohexane, 1,4-diaminocyclohexane, 1,3-bis(aminomethyl)cyclohexane, 1,4-bis(aminomethyl)cyclohexane, isophorone diamine, piperazine, 2,5-dimethylpiperazine, bis(4-aminocyclohexyl)methane, bis(4-aminocyclohexyl)propane, 4,4′-diamino-3,3′-dimethyldicyclohexylpropane, 4,4′-diamino-3,3′-dimethyldicyclohexylmethane, 4,4′-diamino-3,3′-dimethyl-5,5′-dimethyldicyclohexylmethane, 4,4′-diamino-3,3′-dimethyl-5,5′-dimethyldicyclohexylpropane, α,α′-bis(4-aminocyclohexyl)-p-diisopropylbenzene, α,α′-bis(4-aminocyclohexyl)-m-diisopropylbenzene, α,α′-bis(4-aminocyclohexyl)-1,4-cyclohexane and α,α′-bis(4-aminocyclohexyl)-1,3-cyclohexane.

Of these alicyclic diamine recurring units, preferred are recurring units derived from alicyclic diamines such as bis(aminomethyl)cyclohexane, bis(4-aminocyclohexyl)methane and 4,4′-diamino-3,3′-dimethyldicyclohexylmethane. Particularly preferred are recurring units derived from alicyclic diamines such as bis(4-aminocyclohexyl)methane, 1,3-bis(aminocyclohexyl)methane and 1,3-bis(aminomethyl)cyclohexane.

In the invention, a molar ratio between the terephthalic acid recurring units and the aliphatic dicarboxylic acid recurring units contained in the dicarboxylic acid recurring units is determined as mentioned above, so that the molding temperature range of the resulting polyamide resin composition can be widened. In other words, a difference between the upper limit of the molding temperatures (CT max, namely, upper limit of cylinder temperatures of the resin) and the lower limit of temperatures capable of molding the resin (Tm, namely, the lowest temperature for molding the resin or melting point of the resin) is generally not less than 20 °C, preferably 20 to 40 °C, (the difference being calculated by the formula, CT max - Tm), so that the molding temperature of the resin is within a wide range. Accordingly, the obtained resin composition is prominently improved in the molding properties. Moreover, a molded product obtained from the resin composition is excellent in heat resistance properties (e.g., heat aging characteristics and heat distortion properties) and mechanical properties (e.g., flexural strength and abrasion resistance). Generally, if the temperature for molding a resin composition is higher than the above-described CT max, sags and runs of the resin or foaming in the resin is brought about, and thereby molding of the resin composition becomes impossible.

As the aromatic polyamide [A] to be contained in the polyamide resin compositions of the invention, there can be employed aromatic polyamides having an intrinsic viscosity [$\eta$] of 0.5 to 3.0 dl/g, preferably 0.8 to 1.5 dl/g, when measured in a concentrated sulfuric acid at 30 °C.

The aromatic polyamide [A] can be prepared as follows.

For example, the aromatic polyamide [A] can be prepared by polycondensation reaction between diacidic halide of aromatic dicarboxylic acid and diamine, both capable of deriving recurring units of the aromatic polyamide [A], through a solution method, as described in Polymer Reviews, 10, Condensation polymers by Interfacial and Solution Methods ( by P.W. Morgan, Inter-Science Publishers, 1965) or Makromol. Chem., 47, pp. 93-113 (1961). An interfacial polymerization method can be also utilized to obtain the aromatic polyamide [A].

Otherwise, the aromatic polyamide [A] can be also prepared by polycondensation reaction between an aromatic dicarboxylic acid corresponding to the aforementioned aromatic dicarboxylic acid recurring units and diamine corresponding to the aforementioned diamine recurring units (or a salt of the polyamide) in the presence or in the absence of a solvent such as water through a melting method.

Further, the aromatic polyamide [A] can be also prepared by producing oligomer utilizing the above-mentioned solution method and then subjecting the oligomer to polycondensation through a solid phase polymerization method.

The diamine recurring units employed for forming the polyamide [A] may contain aromatic diamine recurring units in addition to the above-mentioned alkylenediamine recurring units. Concrete examples of the aromatic diamine recurring units include recurring units derived from aromatic diamines such as m-xylylenediamine and p-xylylenediamine. These aromatic diamines can be employed singly or in combination of two or more kinds.

The polyamide resin compositions of the invention may contain a fibrous filler as well as the above-described aromatic polyamide [A].

Examples of the fibrous fillers preferably employed in the invention include inorganic or organic fillers such as whole aromatic polyamide fibers, a glass fiber, a carbon fiber, a boron fiber, an alumina fiber and a metal fiber. These inorganic and/or organic fillers can be employed singly or in combination.

Concrete examples of the whole aromatic polyamide fibers include Kevlar (tradename of Dupont Co., Ltd.), Twalon (tradename of Enca Co., Ltd.) and Technola (tradename of Teijin Co., Ltd.).

Among the above-mentioned fibrous fillers, preferably employed are a glass fiber and a carbon fiber from the viewpoint of good balance between cost and performability. If such fibrous filler is added to the aromatic polyamide [A], the resulting composition can be not only enhanced in heat resistance such as a heat distortion temperature but also improved in stiffness at high temperatures.

It is desired that the mean fiber length of the fibrous filler is in the range of 0.1 to 20 mm, preferably in the range of 1 to 10 mm. In the case that the mean fiber length of the fibrous filler is within the above-mentioned range, the resulting polyamide resin composition tends to be improved in the molding properties, and further a molded product obtained from the polyamide resin composition tends to be enhanced in heat resistance (e.g., a heat distortion temperature) and mechanical properties (e.g., tensile strength and flexural strength).

In the case of using the fibrous filler, the fibrous filler is generally contained in the polyamide resin composition of the invention in an amount of 0.5 to 200 parts by weight, preferably 1 to 150 parts by weight, more preferably 10 to 100 parts by weight, per 100 parts by weight of the aromatic polyamide [A].

If the fibrous filler is contained in the composition in an amount of less than 0.1 part by weight per 100 parts by weight of the aromatic polyamide [A], a heat distortion temperature and stiffness at high temperatures of the resulting resin composition are apt to be lowered. Further, even if the amount of the fibrous filler exceeds

200 parts by weight per 100 parts by weight of the aromatic polyamide [A], the heat distortion temperature and other features of the resulting composition can be hardly enhanced.

The aromatic polyamide resin compositions of the invention may further contain various additives such as a particulate filler, an antioxidant, a ultraviolet absorbing agent, a light-protective agent, a heat stabilizer, a phosphate stabilizer, a peroxide decomposer, a basic assisting agent, a nucleating agent, a plasticizer, a lubricant, an antistatic agent, a flame-retardant, a pigment and a dye, according to the necessity.

Concrete examples of the particulate fillers include silica, silica alumina, alumina, talc, graphite, titanium dioxide, molybdenum disulfide and polytetrafluoroethylene. In the case of using such particulate filler in the polyamide resin compositions of the invention, molded products obtained from the compositions tend to be enhanced in the mechanical properties such as tensile strength, flexural strength and flexural modulus of elasticity, and physicochemical properties such as heat resistance (e.g., heat distortion temperature) and water resistance.

The particulate filler is generally used in an amount of 0.01 to 10 parts by weight, preferably 0.1 to 5 parts by weight, per 100 parts by weight of the aromatic polyamide [A].

The mean particle diameter of the particulate filler employed in the invention is generally in the range of 0.1 mμ to 200 μm, preferably in the range of 0.1 mμ to 50 μm. If the mean particle diameter of the particulate filler exceeds the upper limit of the above range, a molded product obtained from the resulting composition has a low mechanical strength or shows bad appearance because the particulate filler acts on the composition as an extraneous matter. The particle diameter of the particulate filler can be measured using, for example, an image analyzer.

The aromatic polyamide resin compositions of the invention can be prepared, for example, by kneading the aromatic polyamide [A] under such conditions that the polyamide [A] is in the molten state (e.g., the polyamide [A] is heated to a temperature of 280 to 360 °C and kept at the same temperature). If necessary, the above-mentioned fibrous filler, particulate filler and other additives can be added to the aromatic polyamide [A], and they are kneaded to prepare polyamide resin compositions of the invention. In the kneading procedure, conventional kneading devices such as an extruder and a kneader can be employed.

The polyamide resin compositions of the invention prepared as above are generally made a powdery form, a pellet form or other forms, and then the resin compositions of various forms can be molded into various molded products utilizing conventional molding methods such as compression molding, injection molding and extrusion molding.

The polyamide resin compositions of the invention have a high crystllization speed, a high heat distortion temperature (high HDT), a molding temperature of wide range and a low water absorption, and further they show high mechanical strength and high impact resistance, so that they can be employed in the arts requiring such excellent properties or precision molding arts. Concretely, they can be favorably employed for automobile parts in automotive industry and electric or electronic parts (e.g., connector, coil bobbin and housing) in electric or electronic industry.

## EFFECT OF THE INVENTION

The polyamide resin compositions of the invention contain a specific aromatic polyamide which contains the aforementioned specific recurring units in the specific amount as described above, so that the compositions have a high heat distortion temperature (high HDT), a molding temperature of wide range and a low water absorption, and further they are excellent in mechanical strength and impact strength.

The present invention is further described by the following examples, but the examples are given by no means to restrict the invention.

## EXANPLE 1

[Synthesis of aromatic polyamide]

255.6 g (2.2 M) of 1,6-diaminohexane, 182.7 g (1.1 M) of terephthalic acid (TA), 160.8 g (1.1 M) of adipic acid (AA), 0.47 g (4.4 x $10^{-3}$ M) of sodium hypophosphite (catalyst) and 146 ml of ion-exchanged water were introduced into a reactor having a capacity of 1.0 1, and they were reacted with each other at 250 °C under a pressure of 35 kg/cm$^2$ in the reactor after nitrogen substitution.

After the reaction was complete, the reaction product was taken out of the reactor into a receiving device under a pressure lower than the pressure in the reactor by approx. 10 kg/cm$^2$. Thus, 510 g of polyamide having an intrinsic viscosity [η] of 0.15 dl/g (at 30 °C in a concentrated sulfuric acid) was obtained.

The obtained polyamide was dried, and then subjected to melt-polymerization at a cylinder temperature of 340 °C using a twin-screw extruder, to obtain aromatic polyamide having an intrinsic viscosity [η] of 1.02 dl/g

(at 30 °C in a concentrated sulfuric acid).

The amount of terephthalic acid recurring units contained in the obtained aromatic polyamide was 50 % by mole, and the melting point of the aromatic polyamide was 308 °C.

[Preparation of polyamide resin composition]

60 parts by weight of the above-obtained aromatic polyamide and 40 parts by weight of a glass fiber (mean fiber length: 3 mm) were introduced into a vented twin-screw extruder (PCM-45 type, produced by Ikegai Tekko Co., Ltd.) from the vent portion, and they were granulated in the extruder at 320 °C to obtain a polyamide resin composition.

Pellets of the obtained polyamide resin composition were subjected to injection molding by the use of an injection molding machine (IS-50, produced by Toshiba Machinery Co., Ltd.) under the following conditions, to give a test strip.

Conditions for injection molding

Cylinder temperature: 310°C/320°C/320°C/320°C
Injection pressure:
primary/secondary = 1,000 $kg/cm^2$ / 800 $kg/cm^2$
Mold temperature: 120 °C

[Evaluation of test strip]

The above-obtained test strip was evaluated on the flexural properties, heat resistance and other properties by the following tests.

The results are set forth in Table 1.

Tensile properties

The test strip of dumbbell #4 (thickness: 2 mm) was measured on the tensile strength at break and the tensile elongation at break according to ASTM D 638.

Flexural properties

The test strip having a size of 3.2mm x 12.7mm x 127mm was subjected to a flexural test, to measure flexural strength and flexural modulus of the test strip according to ASTM D 790.

Heat resistance

The heat resistance of the test strip was evaluated by measuring a heat distortion temperature. The heat distortion temperature is a temperature at which the test strip (size: 6.4mm x 12.7mm x 127mm) loaded a flexure stress of 18.6 $kg/cm^3$ according to ASTM D 648 becomes a deflection of 0.254 mm wherein the temperature of the test strip is raised by 2 °C per minute.

Izod impact strength

The Izod impact strength (notched or non-notched) of the test strip was measured according to ASTM D 256.

Upper limit of molding temperature

The cylinder temperature (CT) of the aforementioned injection molding machine was set to a temperature right above the melting point (Tm) of the resin composition, and the injection molding of the resin composition was initiated. The injection molding was continued at a molding cycle of 15 seconds raising the temperature of CT by 10 °C per minute till the molding of the resin composition became impossible due to occurrence of marked sags or runs and foams.

In this procedure, the highest value of the temperatures capable of molding the resin composition is the upper limit of the molding temperature (CT max) of the resin composition.

For example, in the case of Example 1 (Tm = 308 °C), the injection molding was initiated when CT was 310 °C (300°C/310°C/310°C/310°C), and the injection molding became impossible when CT was 350 °C (340°C/350°C/350°C/350°C), so that CT max of the resin composition in Example 1 was 340 °C.

Molding temperature range

The molding temperature range of the resin composition is calculated by the formula, CT max - Tm.

Water absorption

The test strip used in the flexural test was immersed in water (23 °C) for 24 hours and the weight of the test strip was measured. Further, the test strip was immersed in boiling water (100 °C) for 24 hours and the weight of the test strip was measured. From the difference of the weight between before and after each immersion, the water absorption of the test strip was obtained.

COMPARISON EXAMPLE 1

The procedures of Example 1 were repeated except for using nylon 66 (CM3001G30: trade name of Toray Industries, Inc.) as polyamide, to prepare a test strip.

The obtained test strip was evaluated on various properties according to the aforementioned tests.

The results are also set forth in Table 1.

EXAMPLES 2 - 3 & COMPARISON EXAMPLES 2 - 4

The procedures of Example 1 were repeated except for varying the molar ratio of the dicarboxylic acid recurring units (i.e., molar ratio between the terephthalic acid (TA) recurring units : adipic acid (AA) recurring units) to those set forth in Table 1, and varying the cylinder temperature of the twin-screw extruder in the polymer preparation stage to 350 °C (Example 2 and Comparison example 4), 310 °C (Comparison Example 2) and 320 °C (Comparison Example 3), to prepare various test strips.

The obtained test strips were evaluated on various properties according to the aforementioned tests.

The results are also set forth in Table 1.

COMPARISON EXAPLE 5

The procedures of Example 1 were repeated except for using nylon 46 (TS200F6: trade name of Japan Synthetic Rubber Co., Ltd.) as polyamide, to prepare a test strip.

The obtained test strip was evaluated on various properties according to the aforementioned tests.

The results are also set forth in Table 1.

Table 1

| | | | Comp.Ex.1 NY-66 | Comp.Ex.2 | Comp.Ex.3 | Ex.1 | Ex.2 | Comp.Ex.4 | Ex.3 | Comp.Ex.1 NY-66 |
|---|---|---|---|---|---|---|---|---|---|---|
| Molar ratio | (mol.%) | TA/AA | 0/100 | 30/70 | 40/60 | 50/50 | 60/40 | 70/30 | 55/45 | -- |
| Intrinsic | viscosity | [η] | -- | 1.13 | 1.21 | 1.02 | 1.13 | 1.16 | 1.09 | -- |
| Melting | point | [Tm] | 266 | 281 | 293 | 308 | 326 | 343 | 312 | -- |
| Amount of | glass fiber | (%) | 30 | 40 | 40 | 40 | 40 | 40 | 40 | 30 |
| Tensile TS | strength ($kg/cm^2$) | 23°C | 1800 | 1830 | 1880 | 2090 | 1910 | 2140 | 2050 | 1900 |
| Tensile EL | elongation (%) | 23°C | 4.3 | 4.3 | 4.0 | 3.8 | 3.5 | 3.4 | 3.5 | 10 |
| Flexural FS | strength ($kg/cm^2$) | 23°C | 3000 | 3000 | 3110 | 3280 | 3230 | 3560 | 3300 | 3000 |
| Flexural FM | modulus ($kg/cm^2$) | 23°C | 91.500 | 93.600 | 11.700 | 125.000 | 130.000 | 156.000 | 129.000 | 89.000 |
| Izod impact IZ | strength (kg·cm/cm) | -- | 12 | 12 | 12 | 13 | 13 | 10 | 13 | 11 |
| Heat distortion HDT | temprature (°C) | -- | 262 | 264 | 276 | 293 | 310 | 331 | 301 | 287 |
| Upper limit of molding temprature CTmax | °C | -- | 310 | 310 | 320 | 340 | 350 | 350 | 340 | -- |
| Molding temp. range CTmax-Tm | °C | -- | 44 | 29 | 27 | 32 | 24 | 7 | 28 | -- |
| Water absorption (1/8·BD leaf) | in water at 23°C | after 1 day | 0.82 | 0.45 | 0.36 | 0.28 | 0.22 | 0.15 | 0.25 | 1.8 |
| | in boiling water at 100°C | after 1 day | 5.1 | 3.5 | 3.1 | 2.8 | 2.3 | 2.1 | 2.5 | 8.4 |

## Claims

1. An aromatic polyamide which comprises:
   dicarboxylic acid recurring units (a) comprising 50 - 60% by mole of units derivable from terephthalic acid and 50 - 40% by mole of units derivable from an aliphatic dicarboxylic acid ; and
   diamine recurring units (b) comprising units derivable from an aliphatic alkylenediamine and/or an alicyclic alkylene-diamine
   said aromatic polyamide having an intrinsic viscosity [η] of 0.5 dl/g when measured in a concentrated sulfuric acid at 30°C.

2. An aromatic polyamide according to claim 1 wherein the aliphatic dicarboxylic acid has 4 - 12 carbon atoms and the diamine recurring units (b) are derivable from a straight-chain aliphatic alkylenediamine of 6 - 18 carbon atoms.

3. A polyamide resin composition which comprises a fibrous filler and an aromatic polyamide as claimed in claim 1 or 2.

4. A composition according to claim 3 wherein the amount of the fibrous filler is 0.5 - 200 parts by weight based on 100 parts by weight of the polyamide resin.

5. Molded articles of a composition as claimed in claim 3 or 4.

European Patent Office

# EUROPEAN SEARCH REPORT

Application Number

EP 91 30 2257

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-299689 (MITSUI PETROCHEMICAL INDUSTRIES, LTD)<br>* claims 1-8 *<br>--- | 1-5 | C08G69/26<br>C08L77/06<br>C08K7/02 |
| A | PATENT ABSTRACTS OF JAPAN<br>vol. 8, no. 145 (C-232)(1582) 06 July 1984,<br>& JP-A-59 53536 (MITSUI DENSHIN DENWA KOSHA) 28 March 1984,<br>* the whole document *<br>----- | 1-5 | |
| | | | TECHNICAL FIELDS SEARCHED (Int. Cl.5 ) |
| | | | C08G<br>C08L |

The present search report has been drawn up for all claims

| Place of search | Date of completion of the search | Examiner |
|---|---|---|
| THE HAGUE | 02 JULY 1991 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)